# EUROPEAN PATENT APPLICATION

(11) **EP 1 843 620 A2**
(43) Date of publication of application: **10.10.2007**
(21) Application number: 07105428.2
(22) Date of filing: 02.04.2007
(51) Int. Cl.: H04Q 7/38

(54) **Mobile communications system, base station apparatus, user equipment, and inter-cell handover control method for use therewith**

(30) Priority: 05.04.2006 JP 2006103700
(71) Applicant: NEC CORPORATION, Minato-ku, Tokyo 108-8001 (JP)
(72) Inventor: Ogami, Tadashi, Tokyo 108-8001 (JP)
(74) Representative: Vossius & Partner

(57) **Abstract**

Upon receipt of a trigger for resource allocation, User #n reception control unit 31 of target base station 3 notifies resources of User #n of radio parameters between a source base station and user equipment, received in the trigger for resource allocation, and issues a pilot symbol reception start trigger to User #n demodulator 32. Upon receipt of the reception start trigger, user #n demodulator 32 starts capturing a pilot symbol in accordance with specified parameters. User #n demodulator 32 issues a timing pull-in completion notice to User #n reception control unit 31 after the timing pull-in has been completed in the pilot symbol capture operation.

## Description

The present invention relates to a mobile communications system, a base station apparatus, user equipment, and an inter-cell handover control method for use therewith, and in particular to a handover sequence in a mobile communications system.

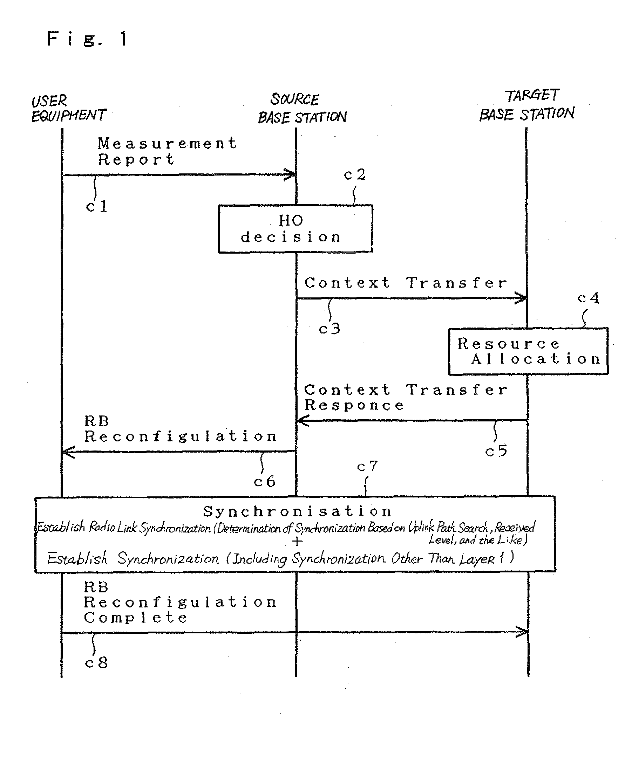

A conventional handover sequence will be described with reference to Fig. 1. In Fig. 1, a source base station decides, based on a measurement report from user equipment (UE), whether or not a handover should be performed [HO (Hand Over) decision] (c1, c2 in Fig. 1).

For performing a handover, the source base station notifies a target base station of parameters for use in the base station to which the user equipment is handed over, such as user equipment information managed by the source base station, and generates a trigger for allocating resources of the target base station (Context Transfer) (c3 in Fig. 1).

After having ensured the allocation of resources in the target base station (Resource Allocation) (c4, c5 in Fig. 1), the source base station notifies the user equipment of parameters which are to be used in the base station to which the user equipment is handed over [RB (Radio Bearer Reconfiguration)] (c6 in Fig. 1), and starts a synchronization operation (Synchronization) between the user equipment and target base station (c7 in Fig. 1). Here, the synchronization operation involves a radio link synchronization process between the user equipment and target base station (determination of synchronization based on an uplink path search, a received level and the like) and a synchronization process between the user equipment and target base station (including the synchronization other than Layer 1) (Synchronization).

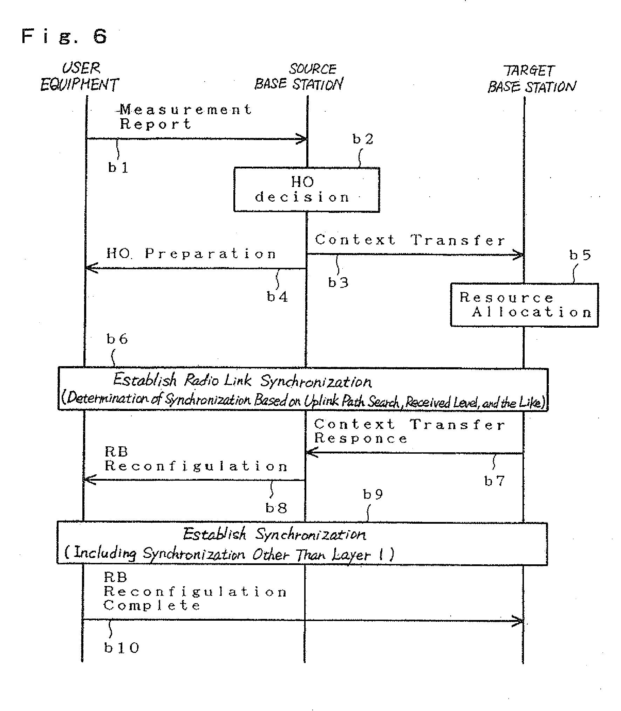

In a 3G (Third Generation) system, several tens to several hundreds of milliseconds are required for establishing radio link synchronization in a cell to which a handover is directed because the synchronization is determined based on the uplink path search, received level and the like. This fact is described, for example, in 3GPPTSG-RAN WG3 Meeting #50 Sophia Antipolis, FRANCE, 10-12, January, 2006 (Tdoc R3-060012), p.6 "Figure 6: Inter pool area H0 sequence 1 (Active mode) for data communication terminal."

In the next-generation system, on the other hand, the abolishment of UL (Up Link) Macro Diversity has been agreed, so that the radio link synchronization must be completely established between user equipment and a base station, to which the user equipment is handed over, in a shorter time as compared with the 3G system.

However, in the conventional handover sequence described above, the user equipment is notified of the handover trigger after required resources have been allocated in the target base station, giving rise to a problem of delay in starting the radio link synchronization operation between the user equipment and target base station to which the user equipment is handed over, and the problem that a long time is required for the handover.

To solve the problem mentioned above, it is an object of the present invention to provide a mobile communications system, a base station apparatus, use equipment, and an inter-cell handover control method for use therewith, which are capable of reducing the time required to establish radio link synchronization between user equipment and a target base station to which the user equipment is handed over at the outset of the handover.

A mobile communications system according to the present invention comprises a source base station to which user equipment has established a link and from which a handover is originated, and a target base station to which the handover is directed and to which the user equipment is to establish a link, wherein the target base station comprises means for establishing a radio link for an uplink radio signal from the user equipment in advance of the handover, and the handover is performed by transmitting and receiving parameters between the source base station and the target base station.

A base station apparatus according to the present invention is configured to perform a handover by transmitting and receiving parameters between a source base station to which a user equipment has established a link and a target base station to which the user equipment is to establish a link. The base station comprises means for establishing a radio link for an uplink signal from the user equipment in advance of the handover when the base station is a target base station.

User equipment according to the present invention is configured to establish synchronization between the user equipment and a target base station after parameters have been transmitted and received between a source base station to which the user equipment has established a link and from which a handover is originated and the target base station to which the handover is directed and to which the user equipment is to establish a link. The user equipment comprises means for transmitting an uplink radio signal to the target base station during the non-transmission interval of intermittent reception in response to a notification of the start of handover preparation from the source base station, wherein the target base station establishes a radio link for an uplink radio signal from the user equipment in advance of the handover.

An inter-cell handover control method according to the present invention is configured for use in a mobile communications system in which a handover is performed by transmitting and receiving parameters between a source base station to which a user equipment has established a link and from which a handover is originated and a target base station to which the handover is directed and to which the user equipment is to establish a link, wherein the target base station establishes a radio link for an uplink radio signal from the user equipment in advance of the handover.

Specifically, the mobile communications system of the present invention is characterized in that a target base station, to which a handover is directed, establishes a radio link for an uplink radio signal from user equipment in advance of a handover to reduce the time required to establish the radio link synchronization between the user equipment and target base station.

Described more specifically, in the mobile communications system of the present invention, a source base station determines whether or not a handover (HO) should be performed based on the result of a measurement report concerning the reception environment (for example, received power and the like) from user equipment (UE), and transmits a trigger for resource allocation to a target base station (Context Transfer).

In response to receipt of the trigger for resource allocation, the target base station captures a pilot symbol transmitted by the user equipment to the source base station to start a timing pull-in operation. Through the timing pull-in operation, the target base station performs a radio link synchronization operation including a synchronization determination based on an uplink path search, a received level and the like.

In this way, in the mobile communications system of the present invention, since the radio link synchronization operation (timing pull-in operation) is completed for the uplink radio signal in advance of a handover, it is possible to reduce the time required to establish radio link synchronization between the user equipment and target base station. Consequently, in the mobile communications system of the present invention, since the timing pull-in operation has been completed in advance of the handover of a next-generation system, it is possible to reduce the time required to establish the radio link synchronization upon handover.

The above and other objects, features, and advantages of the present invention will become apparent from the following description with reference to the accompanying drawings, which illustrate examples of the present invention.
Fig. 1 is a sequence chart illustrating a conventional handover process;
Fig. 2 is a block diagram illustrating the configuration of a mobile communications system according to one embodiment of the present invention;
Fig. 3 is a block diagram illustrating the configuration of a target base station shown in Fig. 2;
Fig. 4 is a sequence chart illustrating the operation of the mobile communications system according to one embodiment of the present invention;
Fig. 5 is a block diagram illustrating the configuration of a target base station according to another embodiment of the present invention; and
Fig. 6 is a sequence chart illustrating the operation of a mobile communications system according to another embodiment of the present invention.

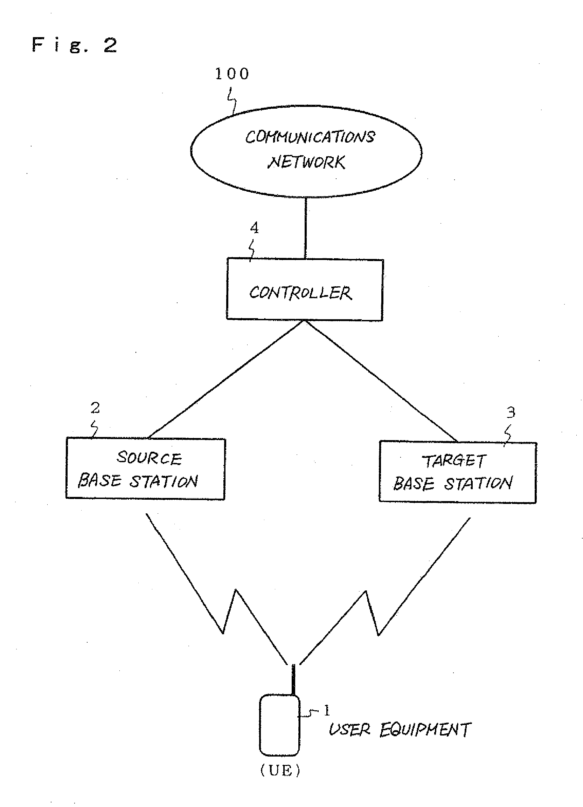

Next, one embodiment of the present invention will be described with reference to the drawings. Fig. 2 is a block diagram illustrating the configuration of a mobile communications system according to one embodiment of the present invention. In Fig. 2, the mobile communications system according to this embodiment of the present invention comprises user equipment (UE) 1, source base station 2, target base station 3, controller 4 for controlling source base station 2 and target base station 3, and network 10 such as an IP (Internet Protocol) communications network, a mobile communications network, or the like.

User equipment 1 is connected to network 100 through source base station 2 or target base station 3 and controller 4. Source base station 2 is a base station from which a handover is originated and with which user equipment 1 currently has an established link. Target base station 3 is a base station to which the handover is directed and to which user equipment 1 is to establish a link. Controller 4 is connected to a local and to a remote access network.

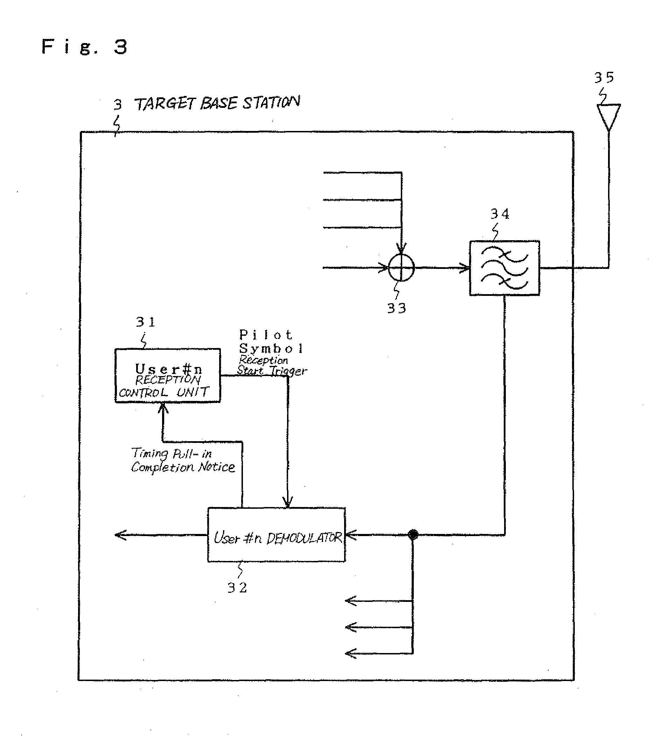

Fig. 3 is a block diagram illustrating the configuration of target base station 3 shown in Fig. 2. In Fig. 3, target base station 3 comprises User #n reception control unit 31, User #n demodulator 32, combiner 33, bandpass filter 34, and antenna 35.

User #n reception control unit 31, upon receipt of a trigger for resource allocation (Context Transfer), notifies resources of User #n of radio parameters between source base station 2 and user equipment 1 received in the trigger for resource allocation, and issues reception start trigger of a pilot symbol to User #n demodulator 32.

Upon receipt of the reception start trigger, User #n demodulator 32 starts a pilot symbol capture operation in accordance with specified parameters. User #n demodulator 32 issues a timing pull-in completion notice to User #n reception control unit 31 after the completion of timing pull-in.

While the configuration of this embodiment has been described above, the configuration of user equipment 1, source base station 2, target base station 3, and controller 4 are well known to those skilled in the art, so that detailed descriptions thereon are omitted.

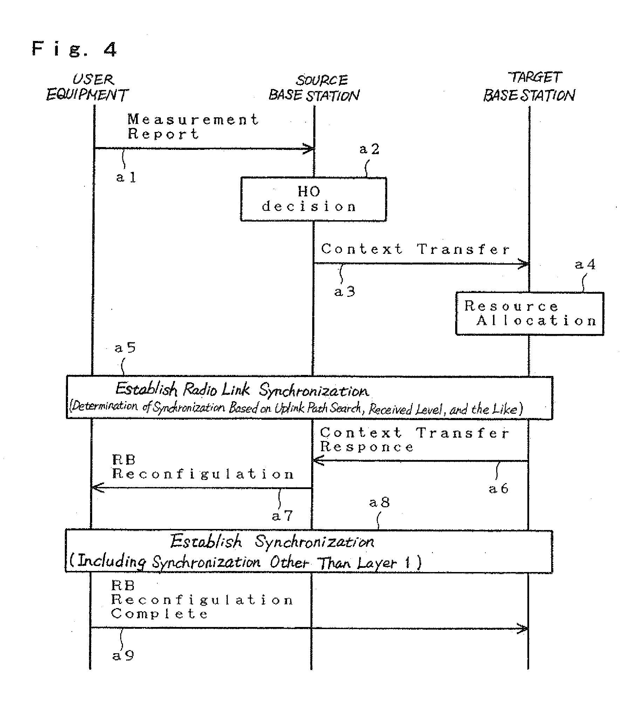

Fig. 4 is a sequence chart illustrating the operation of the mobile communications system according to one embodiment of the present invention. The operation of the mobile communications system according to one embodiment of the present invention will be described below with reference to these Figs. 2 - 4. The following description will be centered on the operation of user equipment 1, source base station 2, and target base station 3.

Source base station 2 decides, based on the result of a measurement report concerning the reception environment (for example, received power and the like) from user equipment 1, whether or not a handover should be performed (a1, a2 in Fig. 4). When a handover is performed, source base station 2 notifies target base station 3 of radio parameters used by source base station 2 and parameters for use in target base station 3 (Context Transfer), and generates a trigger for allocation of resources of target base station 3 and to start the timing pull-in process of an uplink radio signal (a3 in Fig. 4).

After receiving the notice from source base station 2, target base station 3 executes resource allocation and timing pull-in operations, and, based on this timing pull-in operation, establishes radio link synchronization (Radio Link Synchronization) including a synchronization determination based on an uplink path search, a received level and the like (a4, a5 in Fig. 4). After the completion of resource allocation and timing pull-in, target base station 3 notifies source base station 2 of the completion of the process (Context Transfer Response) (a6 in Fig. 4).

After receiving the resource allocation and timing pull-in completion notice from target base station 3, source base station 2 notifies user equipment 1 of parameters [RB (Radio Bearer) Reconfiguration] for use in the base station to which user equipment 1 is handed over (a7 in Fig. 4). Subsequently, synchronization is established between user equipment 1 and target base station 3 (including the synchronization other than Layer 1) (a8 in Fig. 4).

Upon completion of the synchronization process between user equipment 1 and base station 3, user equipment 1 notifies target base station 3 to that effect (RB Reconfiguration Complete) (a9 in Fig. 4), followed by the termination of the handover operation of user equipment 1 to target base station 3.

In this way, target base station 3 peaforms the timing pull-in operation in advance to complete the radio link synchronization operation including the synchronization determination based on the uplink path search, received level and the like and the mobile communications system of this embodiment can reduce the amount of time required to establish the radio link synchronization of the handover sequence.

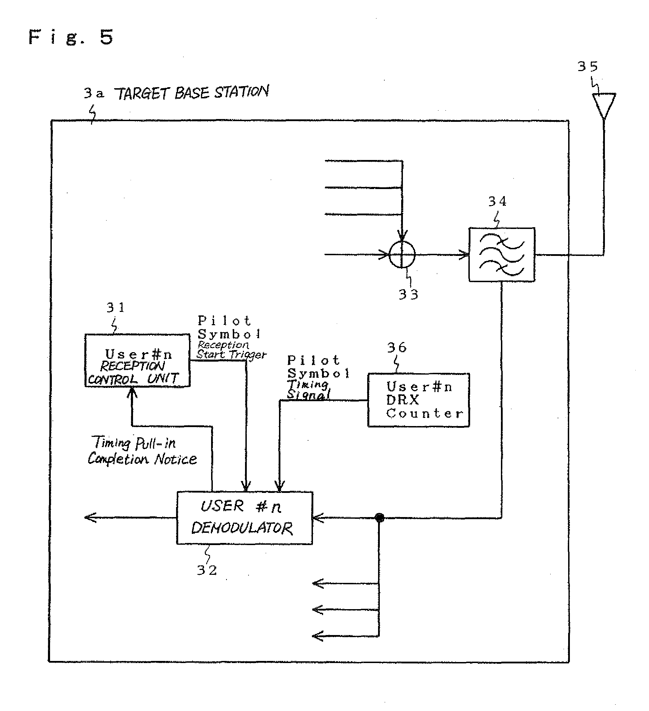

Fig. 5 is a block diagram illustrating the configuration of a target base station according to another embodiment of the present invention. In Fig. 5, target base station 3a, according to this another embodiment of the present invention, is similar in configuration to target base station 3 according to the embodiment of the present invention shown in Fig. 3 except that User #n DRX (Discontinuous Reception) counter (Counter) 36 is added, where the same components are designated the same reference numerals. Also, the same components perform the same operation as that of the embodiment of the present invention shown in Fig. 3. Furthermore, a mobile communications system associated with this another embodiment of the present invention is similar to the mobile communications system according to the foregoing embodiment of the present invention.

When the frequency changes before and after a handover, target base station 3 cannot capture a pilot symbol transmitted at a frequency used by a base station from which the handover is originated, and cannot therefore start the timing pull-in operation. Accordingly, in this embodiment of the present invention, target base station 3a is notified of a DRX cycle (interval between intermittent receptions of user equipment 1) through Context Transfer shown in Fig. 4, thereby permitting target base station 3a to perform the timing pull-in process only when a pilot symbol is being transmitted at a frequency used by the base station to which user equipment is handed over, within an interval during which user equipment 1 (User #n) is performing an intermittent reception operation(non-transmission intervals).

User #n DRX counter 36 monitors user equipment 1 (User #n) for a DRX (intermittent reception mode) state to notify user #n demodulator 32 of a signal indicative of the timing at which user equipment 1 (User #n) transmits the pilot symbol to target base station 3a. User #n demodulator 32 receives the pilot symbol from user equipment 1 (User #n) to execute the timing pull-in operation only during an interval in which it is receiving the pilot symbol transmission timing signal.

Fig. 6 is a sequence chart illustrating the operation of the mobile communications system according to this embodiment of the present invention. The operation of the mobile communications system will be described with reference to Figs. 2, 5, 6. The following description will be centered on the operation of user equipment 1, source base station 2, and target base station 3a.

Source base station 2 decides, based on the result of a measurement report concerning the reception environment (for example, received power and the like) from user equipment 1, whether or not a handover should be performed (b1, b2 in Fig. 6). For performing a handover, source base station 2 notifies target base station 3a of radio parameters (including DRX cycle information) used by source base station 2 and parameters for use in target base station 3a (Context Transfer), and generates a trigger for allocation of resources in target base station 3a and for the start of the timing pull-in process of an uplink radio signal (b3 in Fig. 6).

Simultaneously, source base station 2 notifies user equipment 1 of the start of handover preparation, and generates a trigger for permitting user equipment 1 to transmit a pilot symbol to target base station 3a in a non-transmission interval of DRX (b4 in Fig. 6).

Target base station 3a executes resource allocation and timing pull-in operations after it has received notification from source base station 2, and based on the timing pull-in operation, establishes radio link synchronization including a synchronization determination based on an uplink path search, a received level and the like (b5, b6 in Fig. 6). After the completion of resource allocation and timing pull-in, target base station 3a notifies source base station 2 of the completion of the process (Context Transfer Responce) (b7 in Fig. 6).

After receiving the resource allocation and timing pull-in completion notice from target base station 3a, source base station 2 notifies user equipment 1 of parameters (RB Reconfiguration) for use in the base station to which user equipment 1 is handed over (b8 in Fig. 6). Subsequently, synchronization is established between user equipment 1 and target base station 3a (including synchronization other than Layer 1) (b9 in Fig. 6).

Upon completion of the synchronization process between user equipment 1 and target base station 3a, user equipment 1 notifies target base station 3a to that effect (RB Reconfiguration Complete) (b10 in Fig. 6), followed by termination of the handover operation of user equipment 1 to target base station 3a.

As described above, since target base station 3a has performed the uplink radio signal timing pull-in process in accordance with the DRX cycle of user equipment 1 to complete the radio link synchronization operation including the synchronization determination based on the uplink path search, received level and the like, the mobile communications system of this embodiment can reduce the amount of time required to establish radio link synchronization even when the frequency changes before and after a handover.

According to the foregoing configuration and operation, the present invention can advantageously reduce the amount of time required to establish the radio link synchronization at the outset of a handover between user equipment and a target base station to which the user equipment is handed over.

While a preferred embodiment of the present invention has been described using specific terms, such description is for illustrative purposes only, and it is to be understood that changes and variations may be made without departing from the spirit or scope of the following claims.

## Claims

1. A mobile communications system comprising:
a source base station to which user equipment has established a link and from which a handover is originated; and
a target base station to which the handover is directed and to which said user equipment is to establish a link,
wherein said target base station comprises means for establishing a radio link for an uplink radio signal from said user equipment in advance of the handover, and
the handover is performed by transmitting and receiving parameters between said source base station and said target base station.

2. The mobile communications system according to claim 1, wherein;
said source base station comprises:
means for determining whether or not the handover is performed based on the result of a measurement report concerning the reception environment from said user equipment; and
means for transmitting a trigger for resource allocation to said target base station when the handover is performed, and
said target base station, in response to the trigger for resource allocation received thereby, captures a pilot symbol transmitted by said user equipment to said source base station to start establishing a radio link for the uplink radio signal.

3. The mobile communications system according to claim 2, wherein:
said source base station notifies said target base station of an interval of intermittent reception of said user equipment together with the trigger for resource allocation, and
said target base station establishes the radio link for the uplink radio signal while said user equipment is transmitting at frequency of the base station to which the handover is directed.

4. The mobile communications system according to claim 1, 2 or 3, wherein:
said target base station establishes the radio link in an operation for pulling in a timing for an uplink signal from said user equipment.

5. A base station apparatus for performing a handover by transmitting and receiving parameters between a source base station to which user equipment has established a link and a target base station to which said user equipment is to establish a link, said base station apparatus comprising:
means for establishing a radio link for an uplink signal from said user equipment in advance of the handover when said base station is the target base station.

6. The base station apparatus according to claim 5, wherein:
when said source base station determines that the handover is performed based on the result of a measurement report concerning the reception environment from said user equipment, said base station apparatus captures a pilot symbol transmitted by said user equipment to said source base station to start establishing a radio link for the uplink signal in response to receipt of a trigger for resource allocation transmitted from said source base station.

7. The base station apparatus according to claim 6, wherein:
when said base station apparatus is notified of an interval of intermittent receptions of said user equipment from said source base station together with the trigger for resource allocation, said base station apparatus establishes the radio link for the uplink radio signal while said user equipment is transmitting at a frequency of the target base station.

8. The base station apparatus according to claim 5, 6 or 7, wherein:
said radio link is established in an operation for pulling in a timing for an uplink radio signal from said user equipment.

9. User equipment for establishing synchronization between said user equipment and a target base station after parameters have been transmitted and received between a source base station to which said user equipment has established a link and from which a handover is originated and said target base station to which the handover is directed and to which said user equipment is to establish a link, said user equipment comprising:
means for transmitting an uplink radio signal to said target base station in a non-transmission interval of intermittent reception in response to a notification of the start of handover preparation from said source base station,
wherein said target base station establishes a radio link for an uplink radio signal from said user equipment in advance of the handover.

10. An inter-cell handover control method for use in a mobile communications system in which a handover is performed by transmitting and receiving parameters between a source base station from which a handover is originated and to which a user equipment has established a link and a target base station to which the handover is directed and to which said user equipment is to establish a link, said method comprising the process of:
said target base station establishing a radio link for an uplink radio signal from said user equipment in advance of the handover.

11. The inter-cell handover control method according to claim 10 further comprising the process of:
said source base station determining whether or not the handover is performed based on the result of a measurement report concerning the reception environment from said user equipment;
said source base station transmitting a trigger for resource allocation to said target base station when the handover is performed; and
said target base station capturing a pilot symbol transmitted by said user equipment to said source base station to start establishing a radio link for the uplink radio signal in response to the trigger for resource allocation.

12. The inter-cell handover control method according to claim 11 further comprising the process of:
said source base station notifying said target base station of an interval of intermittent reception of said user equipment together with the trigger for resource allocation; and
said target base station establishing the radio link for the uplink radio signal while said user equipment is transmitting at a frequency of the base station to which the handover is directed.

13. The inter-cell handover control method according to claim 10, 11 or 12, wherein:
said radio link is established in an operation for pulling in a timing for an uplink radio signal from said user equipment.
